**Europäisches Patentamt**

**European Patent Office**

**Office européen des brevets**

(19)

(11) Veröffentlichungsnummer: **0 347 747 B1**

(12) # EUROPÄISCHE PATENTSCHRIFT

(45) Veröffentlichungstag der Patentschrift:
27.12.91 Patentblatt 91/52

(51) Int. Cl.⁵: **G01D 5/24**

(21) Anmeldenummer: **89110860.7**

(22) Anmeldetag: **15.06.89**

(54) **Kondensator für kapazitive Messwertgeber.**

(30) Priorität: **20.06.88 CH 2365/88**

(43) Veröffentlichungstag der Anmeldung:
**27.12.89 Patentblatt 89/52**

(45) Bekanntmachung des Hinweises auf die Patenterteilung:
**27.12.91 Patentblatt 91/52**

(84) Benannte Vertragsstaaten:
**AT BE CH DE FR GB IT LI LU NL SE**

(56) Entgegenhaltungen:
EP-A- 0 245 199
DE-A- 3 418 566
FR-A- 2 386 114

(56) Entgegenhaltungen:
FR-A- 2 457 003
FR-A- 2 483 603
US-A- 4 408 253
US-A- 4 594 640

(73) Patentinhaber: **Weber, Hans Rudolf**
**10, chemin du Grillon**
**CH-1007 Lausanne (CH)**

(72) Erfinder: **Weber, Hans Rudolf**
**10, chemin du Grillon**
**CH-1007 Lausanne (CH)**

(74) Vertreter: **Gasser, François W.**
**Patentanwalt und Lizenzberater,**
**Reiterstrasse 5A**
**CH-3013 Bern (CH)**

EP 0 347 747 B1

## Beschreibung

Die vorliegende Erfindung betrifft einen Kondensator für kapazitive Messwertgeber gemäss dem Oberbegriff des Patentanspruchs 1.

Kapazitive Messwertgeber, die unter Verwendung eines veränderbaren Kondensators als elektromechanisches Element zur Umwandlung einer mechanischen Bewegung in elektrische Signale funktionieren, sind bekannt. In der Praxis unterscheidet man zwei Arten von derartigen Gebern, nämlich lineare Geber zur Messung einer geradlinigen Distanz beziehungsweise einer geradlinigen Verschiebung zwischen einer Ausgangslage und einer Endlage einerseits und Drehgeber zur Messung einer Rotation, beziehungsweise des Winkels zwischen einer Ausgangslage und der nach einer Drehbewegung erreichten Winkelposition. Obwohl die beiden Geber-Arten verschiedenen Zwecken dienen, ist die hiernach beschriebene Technologie und die vorliegende Erfindung vollumfänglich für beide Arten anwendbar. Ebenso ist sie zutreffend für alle dem Fachmann bekannten gegenseitigen Anordnungen von Elektroden, elektrostatischen Schirmen, Reflektoren und Dielektrika. In jedem Falle erfährt das Kondensatorelement pro Bewegungseinheit eine definierte Kapazitätsänderung, die einer Messelektronik zur Auswertung der durch das mechanische Messglied zurückgelegten Distanz oder des von diesem zurückgelegten Winkels dient. Die Auflösung oder Abstufung der messbaren Distanz- und Winkelunterschiede solcher kapazitiver Messwertgeber ist dabei ganz wesentlich von der Feinheit der einzelnen Elektrodenflächen abhängig, denn je dichter diese Flächen quer zur Bewegungsrichtung des mechanischen Messgliedes nebeneinander angeordnet werden können, d.h. je kleiner ihre Ausdehnung senkrecht zur Bewegungsrichtung ist, desto kleiner ist der durch den beweglichen Teil (die Gegenelektroden oder einen Schirm oder einen Reflektor oder ein Dielektrikum) des Kondensators zurückzulegende Weg, um eine klar definierte Kapazitätsveränderung im Kondensator zu erzeugen.

Aufgrund der Tatsache, dass die einzelnen Elektrodenflächen elektrisch einerseits untereinander und andererseits mit der Anzeige- oder Auswertelektronik, verbunden werden müssen, ist jede Elektrodenfläche mit zumindest einem Kontaktierungspunkt versehen. Aufgrund der Anordnung und Geometrie der Elektrodenflächen erfolgt die Kontaktierung der einzelnen Elektrodenflächen-Muster von der Rückseite des Kondensatorteils her, derart, dass durch die Kondensatorelektrode und das diese tragende Substrat hindurchgehende Bohrungen oder Durchbrüche vorgesehen werden, durch die hindurch die Elektrodenflächen kontaktiert werden. Die Grösse dieser Bohrungen oder Durchbrüche beeinflusst nicht nur die Kapazität einer jeden Elektrodenfläche, sofern sie im aktiven Kondensatorbereich liegen, sondern bestimmt auch ganz wesentlich die kleinstmöglichen Dimensionen der Elektrodenflächen mit, da ihnen geometrische Grenzen gesetzt sind, die bedingt durch die mechanische Bearbeitung nicht unterschritten werden können. Damit sind aber der elektrischen Auflösung der mechanischen Bewegung bei vernünftiger elektrischer Interpolation recht enge Grenzen gesetzt, da es für eine Wertänderung der Kapazität des kapazitiven Messwertgebers einer relativ grossen mechanischen Bewegung des mechanischen Messgliedes bedarf. Dass diese Tatsache speziell in der Präzisions-Messtechnik Nachteile aufweist, ist naheliegend. Ein weiterer Nachteil der herkömmlichen Kondensatorteile mit Elektrodenflächen-Muster besteht darin, dass auf einen Träger beidseitig elektrisch leitende Zonen aufgebracht werden müssen ; auf der einen Seite die Elektrodenflächen des veränderbaren Kondensators und auf der anderen Seite die Leiterbahnen und Kontaktierungspunkte.

In neueren Anwendungen von kapazitiven Messwertgebern sind Kondensatorteile mit Elektrodenflächen-Mustern zum Einsatz gelangt, bei denen die balkenartig nebeneinander angeordneten Elektrodenflächen sich seitlich in feinen Leiterbahnen fortsetzen, die dann mit einer punktuell durchbrochenen Isolationsschicht überdeckt sind, durch welche Durchbrüche hindurch auf die Isolationsschicht aufgebrachte, quer zu den Elektroden verlaufende Leiterbahnen elektrisch verbunden sind. Einer der Nachteile dieser bekannten Ausführungsform von Gebern mit solchen Kondensatorteilen liegt darin, dass sie eine bezüglich der wirksamen Elektrodenflächen grosse Grundfläche benötigen und sich deshalb für die Miniaturisierung schlecht eignen.

Der vorliegenden Erfindung liegt die Aufgabe zugrunde, die Nachteile der bekannten Kondensatoren der eingangs erwähnten Art mit Kondensatorteilen mit Elektrodenflächen-Muster zu überwinden und einen Kondensator zu schaffen, der eine merklich bessere Auflösung der zu messenden Distanzen oder Winkel ermöglicht, ohne die elektrische Interpolation unnötig erhöhen zu müssen und der in grossen Serien einfacher und preisgünstiger herstellbar ist als jene. Die Erfindung soll ferner den Aufbau eines vorteilhaften Kondensators ermöglichen, der mit kleinstmöglicher Grundfläche und Einbaumassen die Vorteile der Miniaturisierung der Elektrodenflächen-Muster voll ausnützt und der sich als integrierte Komponente in den Messwertgeber einfügen lässt.

Erfindungsgemäss wird diese Aufgabe durch einen Kondensator gelöst, wie er im Patentanspruch 1 definiert ist.

Vorteilhafte Ausführungsvarianten des erfindungsgemässen Kondensators sowie des in diesem enthaltenen Kondensatorteils mit Elektrodenflächen-Muster werden hiernach anhand der Zeichnung im Detail beschrieben. Es wird dabei darauf hingewiesen, dass weder der konstruktive Aufbau noch die Funktion des kapazitiven Messwertgebers an sich Gegenstand der vorliegenden Erfindung ist, da diese hinlänglich bekannt und unter anderem in den folgenden Patentschriften beschrieben sind : CH-A-643652, CH-A-539837, CH-A-648929 und US-A-3961318, US-A-4420754 sowie US-A-4586260. Aus diesem Grunde wird hiernach auf diese Elemente auch nicht näher eingegangen. In der Zeichnung zeigt

Fig. 1 eine Draufsicht auf ein lineares Kondensatorteil mit Elektrodenflächen-Muster wie es vorteilhafterweise im erfindungsgemässen Kondensator Verwendung findet, in einem stark vergrösserten Massstab, ohne Deckschicht,

Fig. 2 einen Querschnitt durch das Kondensatorteil gemäss Fig. 1 entlang der Linie A-A, im Bereich einer kontaktfreien Kreuzung einer Elektrodenfläche und einer Leiterbahn, in einem nochmals vergrösserten Masstab,

Fig. 3 einen Querschnitt durch das Kondensatorteil gemäss Fig. 1 entlang der Linie B-B, im Bereich einer Kontaktstelle zwischen einer Elektrodenfläche und einer Leiterbahn, im selben Masstab wie er in Fig. 2 verwendet ist,

Fig. 4 bis 11 Querschnitte durch mehrere erfindungsgemässe Kondensatoren die den vorbeschriebenen Kondensatorteil mit Elektrodenflächen und Leiterbahnen gemäss Fig. 1 enthalten,

Fig. 12 ein Beispiel eines linearen Messwertgeberelementes, das einen Kondensatorteil mit Elektrodenflächen-Muster und Leiterbahnen, wie er im erfindungsgemässen Kondensator enthalten sein kann, umfasst, und

Fig. 13 eine Mehrzahl von gleichzeitig und einseitig auf einem gemeinsamen Substrat hergestellte Messwertgeberelemente gemäss Fig. 12

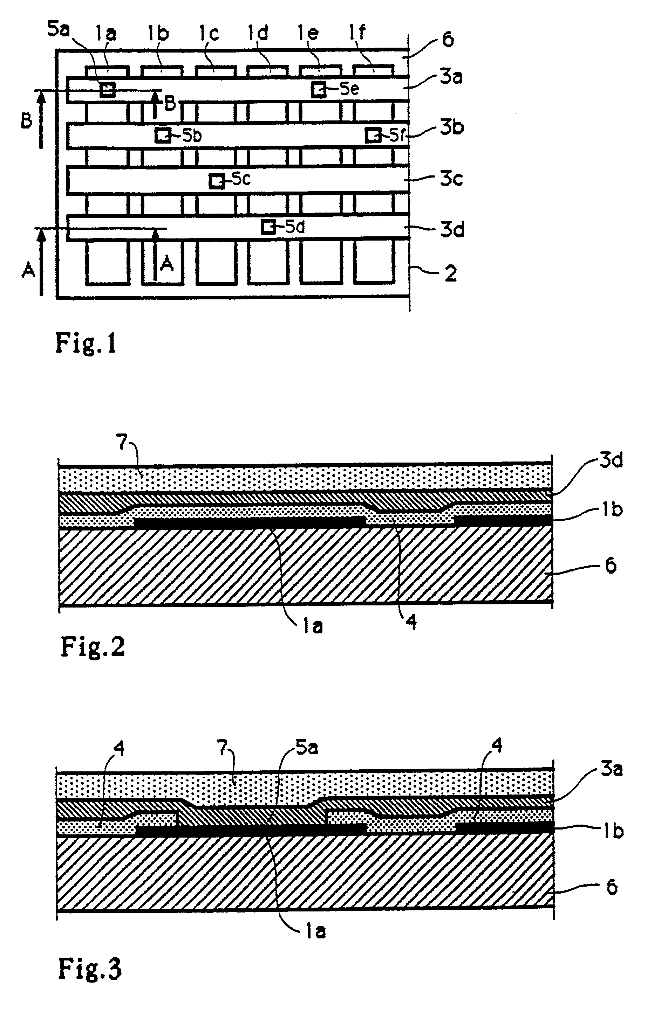

In Fig. 1 erkennt man, dass die Elektrodenflächen 1 auf einem Kondensatorteil 2 des den kapazitiven Teil des Messwertgebers ausmachenden erfindungsgemässen Kondensators parallel eng nebeneinander liegend angeordnet sind, wogegen Leiterbahnen 3 quer dazu verlaufen. Wie aus den Fig. 2 und 3 ersichtlich, liegt zwischen der Ebene der Elektrodenflächen 1 und jener der Leiterbahnen 3 eine Isolierschicht 4, die verhindert, dass die Elektrodenflächen 1a-1f durch die Leiterbahnen 3a-3d generell elektrisch miteinander verbunden werden. Dies darf lediglich an speziell dafür vorgesehenen Kontaktierungspunkten 5 geschehen, um die bei Elektrodenflächen-Mustern üblichen, sich mehrfach wiederholenden Elektrodenmuster, resp. deren regelmässige Verknüpfungen, zu erzeugen, die dafür besorgt sind, dass beim gegenseitigen Verschieben der Elektroden und Gegenelektrode(n) des Kondensators, resp. eines Schirmes, Reflektors oder Dielektrikums Kapazitätswerte erzeugt werden, denen die Auswertelektronik definierte Messgrössen zuordnen kann.

In Fig. 3 erkennt man, dass die Kontaktierungspunkte 5 einfach dadurch geschaffen werden können, dass lokal über den Elektrodenflächen 1 die Isolierschicht 4 nicht aufgebracht, resp. unterbrochen wird, derart, dass die darüber zu liegen kommende Leiterbahn 3 dort direkt auf die Elektrodenfläche 1 zu liegen kommt, so dass es an dieser Stelle zu einer elektrischen Verbindung zwischen der betreffenden Elektrodenfläche 1, hier der Elektrodenfläche 1a und der betreffenden Leiterbahn 3, hier der Leiterbahn 3a, kommt. Demnach ist bei dem beschriebenen Kondensatorteil 2 mit Elektrodenflächen-Muster keinerlei mechanische Bearbeitung notwendig, um die Kontaktierung zwischen den Elektrodenflächen 1 und den Leiterbahnen 3 zu bewerkstelligen. Vorteilhafterweise werden die Kondensatorteile 2 mit Elektrodenflächen-Mustern derart erzeugt, dass auf ein Substrat 6, bei dem es sich sowohl um ein festes als auch um ein flexibles Substrat handeln kann, in einem ersten Arbeitsgang die Elektrodenflächen 1 aufgebracht werden, worauf die Isolierschicht 4 folgt, auf die dann die Leiterbahnen 3 gelegt werden. Die einzelnen Schichten 1, 4 und 3, sowie gegebenenfalls eine gegen mechanische Beschädigungen schützende elektrisch isolierende Deckschicht 7, können mittels bekannten Verfahren wie sie in der Halbleiter- und Dünnfilmtechnik geläufig sind, vorteilhafterweise unter Verwendung von photographischen oder ähnlichen Masken, nacheinander auf das Substrat 6 aufgebracht werden. Die industrielle Herstellung der Kondensatorteile 2 mit Elektrodenflächen-Mustern ist demnach rationell sowie mit grosser Präzision mittels Planarprozessen möglich. Da die Kontaktierungspunkte 5 keine mechanisch bedingte Minimalmasse aufweisen müssen, können die Elektrodenflächen 1 ausserordentlich schmal konfiguriert werden, derart, dass im Vergleich mit herkömmlichen Elektrodenflächen-Mustern quer zur Bewegungsrichtung pro Wegeinheit eine Vielzahl von einzelnen Elektrodenflächen 1 angeordnet werden können. Bei der Herstellung des beschriebenen Kondensatorteiles 2 ist es die photographischen Auflösung, beziehungsweise Reproduktion und nicht wie bis anhin die mechanische Feinheit der Kontaktierungspunkte 5, welche die Feinheit der Elektrodenflächen 1 und damit die Auflösung der mechanischen Bewegung in Weg- oder Winkelinkremente bestimmt.

Das beschriebene Kondensatorteil 2 mit Elektrodenflächen 1 kann, wie hiervor beschrieben ist, nicht nur einfacher und kostengünstiger in Planarprozessen hergestellt werden als die bisher üblichen Kondensatorteile dieser Art, die zweiseitige Bearbeitungen benötigen, sondern ermöglicht auch eine wesentliche Verfeinerung der Messung mechanischer Grössen wie Distanzen und Winkel.

Im Rahmen der vorliegenden Erfindung sollen derartige vorteilhafte Kondensatorteile 2 dem Aufbau erfindungsgemässer Kondensatoren dienen, die sich die einseitige Herstellungstechnologie der Kondensatorteile 2 voll zunutze machen und bei kleinstmöglicher Grundfläche und optimalen Herstellverfahren hochauflösend sind und die als integrierte Elemente im Messwertgeber zusammen mit zumindest einem Teil desselben herstellbar sind.

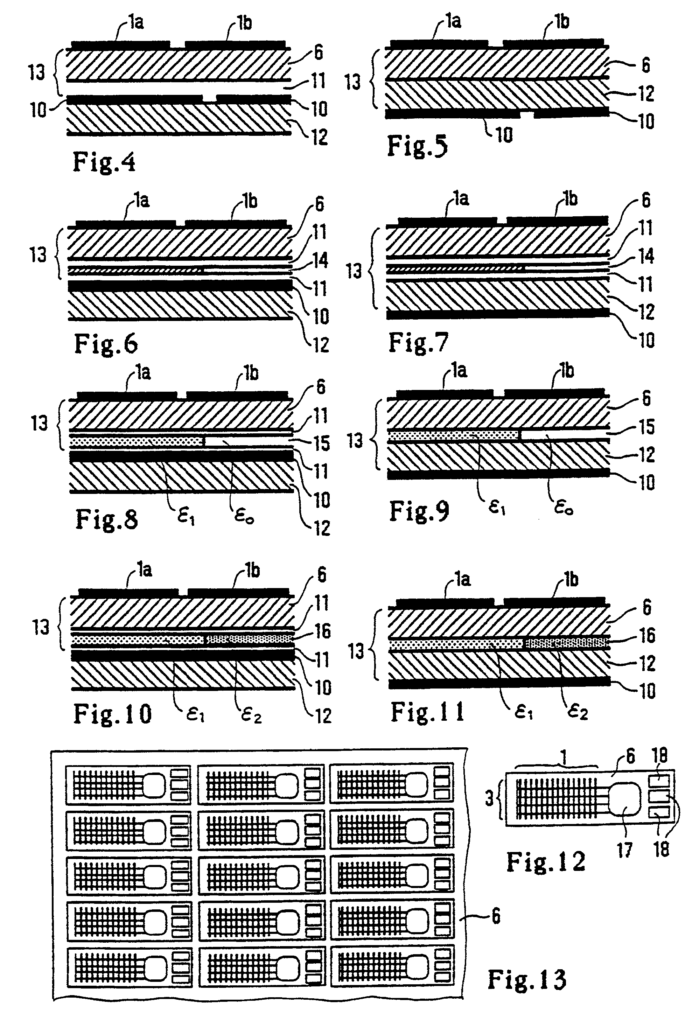

In den Fig. 4 bis 11 sind einige besonders vorteilhafte erfindungsgemässe Kondensatorvarianten jeweils im Schnitt dargestellt, wobei aus Gründen der Uebersichtlichkeit die sich oberhalb der Elektrodenflächen 1, resp. 1a und 1b befindlichen Isolationsschicht 4 und Leiterbahnen 3 weggelassen sind.

Fig. 4 veranschaulicht eine Variante des erfindungsgemässen Kondensators, bei welchem das Dielektrikum 13 aus dem Substrat 6 und einem Luftspalt 11, der zwischen den auf einem Träger 12 aufgebrachten Gegenelektroden 10 und dem Substrat 6 angeordnet ist, besteht. Die Ausführungsvariante eines erfindungsgemässen Kondensators nach Fig. 5 unterscheidet sich dadurch, dass der Träger 12 unmittelbar an das Substrat 6 anschliesst und die Gegenelektroden 10 auf dessen Rückseite angeordnet sind, derart, dass das Dielektrikum 13 aus dem Substrat 6 und dem Träger 12 besteht.

Die Fig. 6 und 7 veranschaulichen zwei weitere Ausführungsvarianten erfindungsgemässer Kondensatoren, die einen elektrostatischen Schirm 14 enthalten. Beim Kondensator nach Fig. 6 ist der aus leitendem Material bestehende elektrostatische Schirm 14, der vorteilhafterweise mit zyklischen Durchbrüchen versehen ist, vorteilhafterweise verschiebbar zwischen das die Elektroden 1 tragende Substrat 6 und die Gegenelektrode 10 in einen Luftspalt 11 eingelegt, derart, dass das Dielektrikum 13 aus dem Substrat 6, dem Luftspalt 11 und dem Schirm 14 besteht. Bei der Ausführungsvariante gemäss Fig. 7 ist wiederum der die Gegenelektrode 10 tragende Träger 12 gedreht, derart, dass die Gegenelektrode 10 auf dessen Unterseite liegt und demnach das Dielektrikum 13 aus dem Substrat 6, dem Luftspalt 11 und dem Träger 12 besteht. Im Luftspalt 11 ist der Schirm 14 angeordnet.

Anstelle des aus leitendem Material bestehenden Schirmes 14 mit Durchbrüchen kann auch eine aus dielektrischem Material, beispielsweise Kunststoff bestehende Lage verwendet werden, auf welche ein elektrisch leitendes Schirmmuster aufgebracht, z.B. aufgedampft oder aufgedruckt ist.

Die Fig. 8 und 9 illustrieren andere vorteilhafte Ausführungsvarianten eines erfindungsgemässen Kondensators, bei denen anstelle eines elektrisch leitenden Schirmes eine durchbrochene aus dielektrischem Material bestehende, vorteilhafterweise verschiebbare Zwischenlage 15 eingelegt ist. Dabei weist die Zwischenlage 15 eine Dielektrizitätskonstante $\varepsilon_1$ auf, die sich von der Dielektrizitätskonstanten $\varepsilon_0$ der mit Luft gefüllten Durchbrüche unterscheidet. Beim Kondensator nach Fig. 8 besteht das Dielektrikum 13 aus dem Substrat 6, der durchbrochenen Zwischenlage 15 und dem Luftspalt 11. Beim Kondensator nach Fig. 9 ist der Träger 12 so angeordnet, dass das Dielektrikum 13 aus dem Substrat 6, der durchbrochenen Zwischenlage 15 sowie dem Träger 12 und gegebenenfalls noch einem zusätzlichen, hier nicht dargestellten Luftspalt, besteht.

Bei den Ausführungsvarianten eines erfindungsgemässen Kondensators gemäss den Fig. 10 und 11 ist die durchbrochene Zwischenlage 15 durch eine vorteilhafterweise verschiebbare Zwischenlage 16 ersetzt, die aus unterschiedliche Dielektrizitätskonstanten $\varepsilon_1$ und $\varepsilon_2$ aufweisenden Materialien besteht. Auch sie kann luftspaltfrei oder in einem Luftspalt 11 angeordnet sein. In der Ausführungsvariante des erfindungsgemässen Kondensators nach Fig. 10, bei welchem die Gegenelektrode 10 auf der der Zwischenlage 16 zugewandten Seite des Trägers 12 angeordnet sind, ist es zweckmässig, die Zwischenlage 16 in einen Luftspalt 11 zu legen, um mechanische Berührungen der Gegenelektrode 10 zu vermeiden, derart, dass hier das Dielektrikum 13 aus dem Substrat 6, dem Luftspalt 11 und der Zwischenlage 16 besteht. In Fig. 11 ist der Träger 12 gedreht, derart, dass die Gegenelektrode 10 auf seiner Unterseite liegt und das Dielektrikum 13 aus dem Substrat 6, der Zwischenlage 16 und dem Träger 12 besteht.

Fig. 12 illustriert, dass der erfindungsgemässe Kondensator es ermöglicht, dass auf dem Kondensatorteil 2, resp. dem Substrat 6 mit den einseitig darauf aufgebrachten Elektrodenflächen 1 und Leiterbahnen 3 auch Elektronikkomponenten 17 und weitere Teile 18 des Messwertgebers aufgebracht werden, derart, dass der erfindungsgemässe Kondensator nicht eine diskrete Komponente im Messwertgeber ist, sondern eine optimal darin eingebaute und integrierte Komponente bildet, die mit den für die Herstellung der Elektronik des Messwertgebers verwendeten Technologie gleichzeitig mit Schaltungskomponenten desselben hergestellt werden kann.

Die Fig. 13 ihrerseits macht deutlich, dass eine Vielzahl von sowohl Kondensatorteile 2 als auch Elektronikkomponenten 17, 18 des Messwertgebers gleichzeitig auf ein und demselben Substrat 6 hergestellt werden können, bevor sie dann in einem einzigen mechanischen Bearbeitungsschritt in bekannter Art und Weise getrennt werden.

Ferner ermöglichen die beschriebenen Kondensatorteile 2 mit Elektrodenflächen 1 auch den Aufbau weiterer vorteilhafter und grundflächensparender Kondensatoren, bei denen einzelne Komponenten des Kondensators und einzelne Elemente der Auswertelektronik des Messwertgebers bezüglich des Substrates 6 auf derselben Seite wie die Elektrodenflächen-, Leiter-, Isolations- und Deckschichten oberhalb der Elektrodenflächen direkt auf dem Kondensatorteil angeordnet werden können.

Dadurch kann der Kondensator als kapazitives Messglied im kapazitiven Messwertgeber — oder gegebenenfalls in anderen Elektronikschaltungen — fest in die Elektronikschaltung integriert werden, resp. Teile der elektronischen Schaltung einteilig mit dem Kondensatorteil ausgeführt werden. Oberhalb der Elektronikkomponenten, die in bekannten Technologien aufgebracht oder realisiert werden können, kann zwecks mechanischer Verstärkung und Versteifung des Kondensatorteiles mit den Elektrodenflächen ein mechanisch fester Stabilisator vorgesehen werden.

Der Fachmann erkennt leicht, dass es problemlos möglich ist, neben einem wie hiervor beschriebenen linearen Elektrodenflächen-Muster die Elektrodenflächen 1 auch in einem Kreis anzuorden, um ein zirkulares Kondensatorteil und damit einen zirkularen Kondensator zu erzeugen, der sich für die Anwendung in einem kapazitiven Messwertgeber für die Messung von Winkeln eignet, wo hohe Auflösung erforderlich ist.

Es ist selbstverständlich, dass je nach Anwendungszweck und angestrebter Messwertauflösung andere Elektrodenflächen-Muster verwendet werden können als die hiervor beschriebenen rechteckförmigen, resp. in einem zirkularen Kondensator kreissegmentförmigen Elektrodenflächen. Ebenso ist es möglich, die Leiterbahnen anders anzuordnen.

Als Herstellungsmethoden für den erfindungsgemässen Kondensator, resp. dessen Kondensatorteil 2 mit integrierter Elektronik lassen sich bekannte Verfahren zur Herstellung von Elektronikschaltungen verwenden. Insbesondere geeignet sind Planarprozesse, wird doch der die Elektrodenflächen 1 tragende Kondensatorteil 2 einseitig auf ein Substrat 6 schichtweise inklusive Elektronikkomponenten 17, 18 aufgebaut. Bei Verwendung eines flexiblen Substrates 6 dient ein vorteilhafterweise zuletzt aufzubauender Stabilisator der Gewährleistung der für die fehlerfreie Messung wichtigen Ebenheit des Kondensatorteiles 2. Bei Verwendung eines Substrates 6 z.B. aus Silizium, in und auf das die Elektrodenflächen 1 und Leiterbahnen 3 resp. Isolationen 4, 7 mittels der in der Halbleiterindustrie üblichen Beschichtungs-, Aetz- und Dopingprozesse zur Leitendmachung, beziehungsweise Isolierung selektiver Zonen aufbringbar sind, dient ein Stabilisator primär dem Schutz des Kondensatorteiles 2 gegen mechanische Beschädigungen.

Ein flexibles Substrat 6 kann von der Elektrodenfläche 1 aus in beliebiger Richtung samt den Leiterbahnen 3 an eine Stelle geführt werden, wo zur Aufnahme der Elektronikkomponenten 17, 18 Platz vorhanden ist.

Der Fachmann erkennt, dass in den hiervor beschriebenen Ausführungsvarianten des erfindungsgemässen Kondensators die Gegenelektrode oder die Gegenelektroden 10 oder ein gegenüber den Elektrodenflächen 1 verschiebbarer elektrostatischer Schirm 14, resp. eine dielektrische Zwischenlage 15, 16 oder ein hiervor nicht illustrierter Reflektor eines derart aufgebauten Kondensators mit integrierter Elektronik entgegen aller bisher üblichen Praxis auf der Rückseite des Substrates 6 mit den Elektrodenflächen 1 angeordnet ist, derart, dass das Substrat 6 zumindest Teil des Dielektrikums 13 des Kondensators ist.

Alternativ ist es selbstverständlich auch möglich, den Träger 12 bezüglich des Substrates 6 oberhalb der Elektrodenflächen 1 anzuordnen, derart, dass das Dielektrikum anstelle des Substrates 6 den Träger 12, gegebenenfalls zusätzlich zu einem Luftspalt und einem Schirm oder Reflektor, beinhaltet.

Verglichen mit einem Kondensator, dessen Dielektrikum aus Luft und gegebenenfalls einem Schirm oder Reflektor besteht, hat die Einbeziehung des Substrates 6 und/oder des Trägers 12 in das Dielektrikum zur Folge, dass bei gleichbleibendem Elektrodenabstand die Kapazität erhöht wird, oder dass bei gleichbleibender Kapazität der Elektrodenabstand grösser gemacht werden kann.

## Patentansprüche

1. Kondensator für kapazitive Messwertgeber mit relativ zueinander verschiebbaren Kondensatorelementen zwecks Veränderung der Kapazität des Messwertgebers in Abhängigkeit von der relativen Lage der Kondensatorelemente zueinander, bei welchem ein erster Kondensatorteil (2) Elektrodenflächen-Muster aus einzelnen Elektrodenflächen (1) aufweist, die auf einem Substrat (6) aufgebracht und in vorbestimmter Art und Weise mittels Leiterbahnen (3) elektrisch miteinander verbunden sind, wobei sich die Leiterbahnen (3) und die Elektrodenflächen (1) auf derselben Seite des Substrates (6) befinden und dass zwischen den Leiterbahnen (3) und den Elektrodenflächen (1) eine Isolierschicht (4) liegt, die an vorbestimmten Kontaktierungspunkten (5) unterbrochen ist, derart, dass dort jeweils eine Elektrodenfläche (1a) mit einer Leiterbahn (3a) elektrisch verbunden ist und dass ein zweiter Kondensatorteil aus einem Träger (12) besteht, auf den die Gegenelektrode oder die Gegenelektroden (10) aufgebracht sind, dadurch gekennzeichnet, dass das Substrat (6) und/oder der Träger (12) zumindest Teil des Dielektrikums (13) des Kondensators ist.

2. Kondensator nach Anspruch 1, dadurch gekennzeichnet, dass das Substrat (6) aus festem oder flexiblem Material besteht, auf das die Elektrodenflächen (1), die Isolierschicht (4) und die Leiterbahnen (3) nacheinander mittels eines Planarprozesses wie Aufdampfen, Drucken, Aetzen oder Gravieren aufgebracht sind.

3. Kondensator gemäss Anspruch 1, dadurch gekennzeichnet, dass er einteilig mit Elektronikkomponenten (17, 18) verbunden ist, die auf der selben Seite des Substrates (6) wie die Elektrodenflächen (1) aufgebaut sind.

4. Kondensator nach Anspruch 1, dadurch gekennzeichnet, dass er oberhalb der Elektrodenflächen (1) und der Leiterbahnen (3) auf der selben Seite des Substrates (6) zumindest noch Elektronikkomponenten aufweist.

5. Kondensator nach Anspruch 1, dadurch gekennzeichnet, dass das Dielektrikum (13) aus Substrat (6) und Luftspalt (11) besteht.

6. Kondensator nach Anspruch 1, dadurch gekennzeichnet, dass das Dielektrikum (13) aus Substrat (6) und Träger (12) besteht.

7. Kondensator nach Anspruch 5 oder 6, dadurch gekennzeichnet, dass das Dielektrikum (13) zusätzlich einen Schirm (14) oder eine Zwischenlage (15, 16) umfasst.

8. Kondensator nach Anspruch 7, dadurch gekennzeichnet, dass die Zwischenlage (15, 16) aus einem durchbrochenen dielektrischen Material oder einem Material mit unterschiedlichen Dielektrizitätskonstanten besteht.

9. Kondensator nach Anspruch 1, dadurch gekennzeichnet, dass das Substrat (6) aus Silicium besteht, in oder auf dem die Elektrodenflächen (1) integriert sind.

10. Kondensator nach Anspruch 4 und 9, dadurch gekennzeichnet, dass auch die Elektronikkomponenten auf dem Substrat (6) integriert sind.

11. Kondensator nach Anspruch 7, dadurch gekennzeichnet, dass der Schirm aus dielektrischem Material mit selektiv aufgebrachter leitender Schicht besteht.

## Claims

1. A capacitor for capacitive measuring devices with mutually displaceable capacitor elements for the purpose of varying the capacitance of the measuring device as a function of the relative position of the capacitor elements to one another, in which a first capacitor element (2) has patterned electrode areas consisting of individual electrode areas (1) which are applied to a substrate (6) and are electrically connected to one another in a predetermined manner by means of conducting strips (3), where the conducting strips (3) and the electrode areas (1) are located on the same side of the substrate (6) and where between the conducting strips (3) and the electrode areas (1) there is an insulating layer (4) which is interrupted at predetermined contact points (5) such that at these points an electrode area (1a) is electrically connected to a conducting strip (3a) and that a second capacitor element consists of a carrier (12) on which the counter-electrode or counter-electrodes (10) are mounted, characterised in that the substrate (6) and/or the carrier (12) form at least part of the dielectric (13) of the capacitor.

2. A capacitor as in Claim 1, characterised in that the substrate (6) is made of rigid or flexible material on which the electrode areas (1), the insulating layer (4) and the ' conducting strips (3) are applied successively by means of planar processes such as sputtering, printing, etching or engraving.

3. A capacitor as in Claim 1, characterised in that it is linked in a single element with electronic components (17, 18) which are built up in layers on the same side of the substrate (6) as the electrode areas (1).

4. A capacitor as in Claim 1, characterised in that at least some electronic components are located above the electrode areas (1) and the conducting strips (3) on the same side of the substrate (6).

5. A capacitor as in Claim 1, characterised in that the dielectric (13) consists of the substrate (6) and the air gap (11).

6. A capacitor as in Claim 1, characterised in that the dielectric (13) consists of the substrate (6) and the carrier (12).

7. A capacitor as in Claim 5 or 6, characterized in that the dielectric (13) also includes a screen (14) or an intermediate layer (15, 16).

8. A capacitor as in Claim 7, characterised in that the intermediate layer (15, 16) consists of a dielectric material with apertures or a material with different dielectric constants.

9. A capacitor as in Claim 1, characterised in that the substrate (6) is made of silicon, in or on which the electrode areas (1) are integrated.

10. A capacitor as in Claims 4 and 9, characterised in that the electronic components are integrated on the substrate (6).

11. A capacitor as in Claim 7, characterised in that the screen consists of a dielectric material with a selectively applied conductive layer.

## Revendications

1. Condensateur pour dispositif de mesure à senseur capacitif comportant des éléments de condensateur déplaçable l'un par rapport à l'autre pour modifier la capacité du dispositif de mesure en fonction de la position relative respective des éléments de condensateur, une première partie de condensateur (2) portant un dessin d'électrodes formées de différentes surfaces d'électrodes (1) qui sont réalisées sur un substrat (6) et sont reliées électriquement d'une manière prédéterminée par des chemins conducteurs (3), ces chemins conducteurs (3) et les surfaces d'électrodes (1) se trouvant du même côté du substrat (6) et en ce qu'entre les chemins conducteurs (3) et les surfaces d'électrodes (1) il est prévu une couche isolante (4) qui est interrompue à des points de contact (5) prédéterminés, et en ce qu'il y est prévu chaque fois une surface d'électrode (1a) avec un chemin conducteur (3a) relié électriquement et une seconde partie de condensateur se compose d'un support (12) portant la contre-électrode ou les contre-électrodes (10) condensateur caractérisé en ce que le substrat (6) et/ou le support (12) appartiennent au moins partiellement au diélectrique (13) du condensateur.

2. Condensateur selon la revendication 1, caractérisé en ce que le substrat (6) est réalisé en un matériau solide ou souple sur lequel sont appliquées les surfaces d'électrodes (1), la couche d'isolation (4) et les chemins conducteurs (3), successivement, selon un procédé planaire tel que le dépôt à la vapeur, l'impression, l'attaque chimique ou la gravure.

3. Condensateur selon la revendication 1, caractérisé en ce qu'il est relié en une seule pièce aux composants électroniques (17, 18) qui sont prévus du même côté du substrat (6) que les surfaces d'électrodes (1).

4. Condensateur selon la revendication 1, caractérisé en ce que du même côté du substrat (6), au-dessus des surfaces d'électrodes (1) et des chemins conducteurs (3), il porte au moins des composants électroniques.

5. Condensteur selon la revendication 1, caractérisé en ce que le diélectrique (13) est formé du substrat (6) et d'un intervalle d'air (11).

6. Condensateur selon la revendication 1, caractérisé en ce que le diélectrique (13) est formé du substrat (6) et du support (12).

7. Condensateur selon les revendications 5 et 6, caractérisé en ce que le diélectrique (13) comprend en outre un écran (14) ou une couche intermédiaire (15, 16).

8. Condensateur selon la revendication 7, caractérisé en ce que la couche intermédiaire (15, 16) est formée d'un matériau diélectrique interrompu ou d'un matériau diélectrique interrompu ou d'un matériau ayant des constantes diélectriques différentes.

9. Condensateur selon la revendication 1, caractérisé en ce que le substrat (6) est en silicium dans lequel ou sur lequel sont intégrées les surfaces d'électrodes (1).

10. Condensateur selon les revendications 4 et 9, caractérisé en ce que les composants électroniques sont également intégrés au substrat (6).

11. Condensateur selon la revendication 7, caractérisé en ce que l'écran est en une matière diélectrique sur lequel est appliqué sélectivement une couche conductrice.

Fig.1

Fig.2

Fig.3

Fig.4

Fig.5

Fig.6

Fig.7

Fig.8

Fig.9

Fig.10

Fig.11

Fig.12

Fig.13